# EUROPEAN PATENT SPECIFICATION

(11) **EP 3 468 832 B1**
(45) Date of publication and mention of the grant of the patent: **07.06.2023**
(21) Application number: 17746181.1
(22) Date of filing: 13.06.2017
(51) Int. Cl.: B62D 25/20, B62D 65/14, B60N 2/015

(54) **DEVICE FOR MOUNTING SEATS FOR MOTOR VEHICLES**
VORRICHTUNG ZUR BEFESTIGUNG VON SITZEN FÜR KRAFTFAHRZEUGE
DISPOSITIF DE MONTAGE DE SIÈGES POUR VÉHICULES À MOTEUR

(30) Priority: 13.06.2016 IT UA20164332
(43) Date of publication of application: 17.04.2019
(73) Proprietor: Buccini, Claudio, Messina (IT)
(72) Inventor: Buccini, Claudio, Messina (IT)
(74) Representative: Sach, Greg Robert
(86) International application number: PCT/IB2017/053503
(87) International publication number: WO 2017/216721

(56) References cited:
- EP-A1- 0 619 215
- EP-A1- 1 129 929
- EP-A1- 1 710 153
- EP-A1- 1 710 153
- EP-A1- 1 792 808
- EP-A1- 2 676 869
- EP-A1- 2 860 087
- EP-A2- 1 093 995
- EP-A2- 1 125 829
- WO-A1-2004/024543
- DE-A1- 1 405 962
- DE-A1- 1 405 962
- DE-A1- 2 923 874
- DE-A1- 10 018 407
- DE-A1-102006 015 872
- DE-A1-102010 021 087
- DE-U1-202015 008 168
- US-A- 3 617 087
- US-A- 3 617 087
- US-A- 5 127 704
- US-A1- 2006 284 044
- US-A1- 2006 284 044
- US-B1- 6 375 247

## Description

The present invention refers to the field of equipment for vehicles for the transport of people in general, and in particular the invention refers to vehicles that are equipped with single place seats or also with more than one place seats. Reference is made for convenience to known vehicles, such as cars having two or more places, with any type of traction, both front, rear and four-wheel drive.

For each user that has boarded at least a few times on a motor vehicle as a passenger sitting down in the back seats, it is absolutely known that one of the factors of greatest inconvenience of such a position is the lack of space to stretch the legs and to accommodate comfortably the feet This problem is due in particular to the front seats and to the means on which said seats are fixed, and also to arrangements concerning the vehicle which are usually housed at the level of the resting plane of the feet.

Vehicles are known for example which include guides for fixing and for sliding forward and backward the front seats, said guides being usually placed laterally with respect to the front seat and allow adjustment in order to find the best position for the driver and also for the passenger seated in the front seat beside the driver. Vehicles are known having seats that are individually housed, as well as vehicles on which the front seats are housed on a single support platform, but in any case the fixing guides or the sliding elements are always positioned in the area in which the feet of the passengers accommodated in the rear seats are supported.

As it is known the rear seats due to their nature are more inconvenient concerning the space available for passengers, because the various equipment placed below the seats of the driver and of the front passenger beside the driver, such as adjustment levers, first aid kits, and so on further aggravate the discomfort situation of the passengers accommodated on the rear seats.

In the art the problem of passenger space for the feet has been addressed, but has been solved in a non-convincing way. Normally even vehicles of the highest range have front seats fixed to the frame, more precisely to the supporting plane or floor of the motor vehicle, usually two lateral guide rails are made for the front seats (or seat), that are more or less bulky. In any case, the space for the feet of the rear passengers is substantially limited in height and in width.

One of the most relevant examples of attempt for improvement upon said problem is described in document US2006/0284044 which describes an apparatus for fixing a seat to a vehicle body. The vehicle substantially comprises a frame that has between its equipment a support surface which acts as a floor, a central tunnel, and at least two lateral shoulders. The document describes a system for fixing the seats to the frame, in particular said system or device is adapted to be fixed to the side shoulders of the frame and on the central tunnel.

In one or more embodiments said device comprises a plurality of parts that make up said device, such as brackets or mounting brackets for said device (which extend anyway into the housing for the feet), a plurality of screws and fasteners for said brackets, at least two lower rails which house respective upper sliding rails for each seat to allow the sliding of said seats, fixing pins for said seats that protrude from said upper sliding rails, fixing mechanisms placed on said upper rails to accommodate a further device for transversal adjustment to maintain the side rails rigidly connected to one another during sliding. Three preferred embodiments are described having all substantially the same purpose, namely, as stated, to provide a different mounting system for the seats of motor vehicles which also includes the functionality to guarantee more space for the user's feet

In particular it is to be noted that what varies between the embodiments are the arms or fixing brackets that can be developed longitudinally as seat slide rails, or placed such as front and rear support for the rails, or aga in, the rear arms may be fixed to the frame on the support plane of the vehicle in a rear area with respect to the front seat.

In particular it is to be noted that said mounting system for seats includes a large amount of parts and components disconnected from each other, which are assembled as a true assembly kit, said kit in addition to being extremely complex for the function it performs, is composed by parts that are easily damaged and inconvenient to replace. From the industrial point of view there is no practicality or convenience of use of such a system that also at an aesthetic level has little impact. The costs, however, are not contained and the assembly operations are not at all convenient, in fact they are extremely long and complex far the current modern automation standards. Still, in disadvantageous manner, the arms or fixing brackets, protrude at least partially in the space to suitable to house the feet of the passengers of the rear seats, in particular in an embodiment of the rear arms are fixed to the vehicle floor, thus substantially nullifying at least the appearance of being able to provide more space for the feet of the rear passengers. An object of this invention is to describe an innovative device suitable to solve the problems of the known art described earlier.

Document US2016/0159402 describes a lower vehicle-body structure for an automotive vehicle. The structure described has a single cross member extending in a vehicle width direction which is provided between a portion of a side sill which is positioned near a center pillar and a tunnel portion and over a floor panel. For each seat, a pair of seat-rail mounting seats and are provided at a lower portion of the tunnel portion to be spaced apart from the cross member in a vehicle longitudinal direction. A seat rail is rigidly connected to the corresponding pair of seat-rail mounting seat in order to place such seat rails over the single cross member.

Document DE 100 18 407 describes a seat module comprising a floor part, wherein the seat adjustment elements, the seat trim parts, the electrical lines connected to the seat and a floor covering is preassembled outside the body of a motor vehicle. The floor part has support edges on its circumference which are supported in adhesive channels filled with adhesive on the supporting composite of the body of the motor vehicle. The seat module is inserted as a prefabricated unit into the supporting composite of the body of the motor vehicle in such a way that the floor part forms a false floor in the region of the seat module with respect to the vehicle floor.

A particular object of this invention is to describe an innovative device for mounting seats for motor vehicles that is simple and easy to mount on the vehicle.

A further object of the present invention is to describe a device for mounting seats that is substantially suitable for any type of motor vehicle.

Another object of the present invention is to describe a device for mounting seats for motor vehicles that allows easy and quick mounting of one or more seats.

It is also an object of the present invention to describe a device for mounting seats for motor vehicles which is easily produced industrially. It is still an object of the present invention to describe a device for mounting seats for motor vehicles which allows to optimize substantially all the space below said device.

Yet it is an object of the present invention describe a device that is robust and durable and very simple in maintenance.

A further object of the present invention is to describe a device that is versatile and adaptable to a plurality of vehicles in a plurality of ways. Still an object of the present invention is to describe a mounting device for a car seat that is pleasing to the eye and therefore suitable to contribute to the aesthetics of the motor vehicles of any range type. Also an object of this invention to describe a mounting device for motor vehicle seats which also carries additional housing functions for any additional components that are useful to a motor vehicle.

These and further objects will be achieved thanks to the innovative device for the assembly of seats described by the present invention; said device comprising at least means for housing one or more seats of a motor vehicle, said means being adapted to lift said one or more seats with respect to the frame part of said motor vehicle that acts as a supporting plane. In a particularly advantageous way said device comprises at least a floor pan for said one or more seats, said floor pan being suitable to support at least said one or more seats and to allow the sliding to adjust the position of said seats both in the sense of more or less advanced position than in the sense of height of the seats with respect to the plane of the lower frame.

Said floor pan in a particularly advantageous way is suitable to be fixed to said frame in an extremely simple and immediate way, in one or more forms of particularly preferred realization of the innovative device described by the present invention said fixing takes place by means of predefined in-line locking points, preferably not less than three. Moreover said floor pan is suitable to be fixed for example to the central tunnel usually present in a motor vehicle and to the two lateral shoulders of the frame of the vehicle floor.

In a particularly advantageous way said floor pan can be preferably molded and in a single piece in fact, usually, the internal dimensions of the plane of the frame of a vehicle and the distance between the shoulders and the central tunnel are substantially standard, which allows assembly the in production line, whether it be robotic or not, that is extremely fast and easy.

Said innovative device can be suitable for a plurality of vehicles, and in any case, in an absolutely advantageous way, said device substantially comprising a single piece floor pan, will be extremely simple to produce and adapt. Each car manufacturer can mold, have molded, have molded and pre-assembled the seats and other devices in an advantageous way for the simplification of assembly in line, the floor pan best suited to each vehicle into production at a very low cost.

Still, the device is particularly solid and said feature in an advantageous way increases the overall resistance of the vehicle to side impacts with improved occupant protection.

Moreover, said innovative mounting device for seats includes areas for fastening of safety belts and areas for the housing of additional useful objects for setting up the interior space of a motor vehicle; therefore, in a further advantageous way said device provides the possibility to mount as a single block for example both front seats and the related equipment, with remarkable convenience, acting as a mounting base for each of said equipment, and further with significant cost savings. Still, thanks to the device, the lower floor of the motor vehicle is not drilled to fix each one of these arrangements, thus benefitting also the aesthetics of the vehicle itself, leaving said lower floor free of any obstruction.

Moreover, in an extremely advantageous way, it is nevertheless possible at any time to replace each of the components mounted on flatbed innovative supporting surface quickly and simply, thus making the maintenance more economical with a considerable saving of time. Obviously, thanks to said floor pan passengers accommodated on the rear seats will benefit from a significantly increased space to house the feet comfortably without bumping against the sliding rails of the seats usually fixed on the frame support surface, as well as having a potentially even more extended space in height, all to the benefit of the comfort for the feet. In further advantageous fashion, unlike the system described earlier with reference to the prior art, there will not be brackets, screws or pins to invade the underlying compartment housing said supporting surface, due to which, in an extremely advantageous way the passengers will not risk to stuck the feet between the various fastening elements, risking also to be injured or to become dirty with said brackets or screws or other fastening means placed below the seat surface.

In further advantageous fashion, cleaning the motor vehicle in the area beneath the seats will be extremely simple and convenient, which as is known, is otherwise an extremely uncomfortable operation and often does not lead to satisfactory results.

Note that in a further advantageous manner, it will be also possible to use said device on vehicles during assembly, but also to change the arrangement of the seats and of the spaces of the vehicles already produced, in fact, it will be enough to simply disassemble the already mounted seats and the related fittings and mount them on the innovative device for the mounting the seats described by the present invention to benefit from any advantage here described. For assembly of the innovative device on vehicles already produced, will be sufficient to carry out some simple modifications to the frame, such as for example some holes, to allow their adaptation, depending on the embodiment of choice, in substantially any vehicle.

This, however, with costs significantly reduced due to the ease of industrial production of these innovative devices and to their versatility. These and other advantages, as well as variants and embodiments obtained thanks to the innovative device for mounting of seats described by the present invention will be further investigated and described with reference to the accompanying figures in which:
in fig. 1a it is represented an example of an embodiment of a prior art construction;
in fig. 1b it is represented a further example of an embodiment of a prior art construction of common application;
in fig. 1c it is represented a front view of the device for mounting seats innovatively realized according to the present invention;
in fig. 2a, 2b, 2c there are represented some forms of particularly preferred embodiments of the innovative device for mounting seats described by the present invention;
in fig. 3a and 3b there are represented some views of applications of the innovative device according to the present invention;
in fig. 4a and 4b are represented some further variants of particularly preferred forms of realization of the innovative device described by the present invention;
in fig. 5a and 5b it is represented in different views an exemplary embodiment of the realization of the sliding movement of the seats on the innovative device described by the present invention;
in fig. 6 it is represented a different view of a further example of a preferred embodiment of the innovative device described by the present invention;
in fig. 7 and 8 are represented further examples of particularly preferred embodiments of the innovative device described by the present invention.

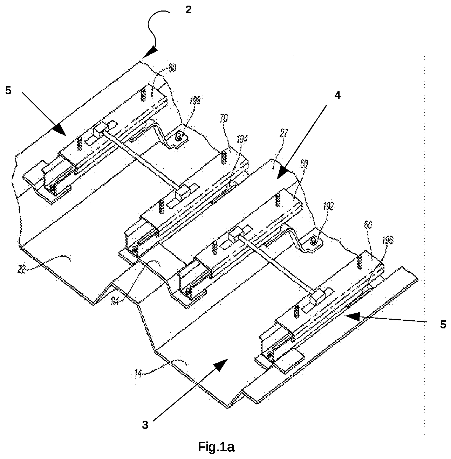

With reference to figure 1a, there is shown the mounting seats system S described above, which represents an attempt at a solution to the problem of the space for the passenger's feet.

It is represented substantially a frame 2 of a vehicle comprising a supporting surface 3 which acts as a floor, a central tunnel 4, and two lateral shoulders 5. The fastening system of the seats to the frame is adapted to be fixed to the lateral shoulders of the frame and on the central tunnel. In particular, the described system immediately appears to be very complex to assembly, in addition to comprise a variety of different components to compose said system. The system in particular appears scarcely capable of being easily produced and industrially reproducible in a quick and economical way, in addition to immediately appear as a system that renders more complex the assembly of the vehicle and of the related systems for mounting seats.

Again, as said, elements such as brackets or fixing arms for said system in any case protrude in the housing for the feet and in disadvantageous way, they invade the space for the feet that was tried to create. Also one of these problems is maintained, namely screws, brackets, arms and so on can easily be impacted by the feet of the users accommodated in the rear seats, this could easily damage or scratch the passengers' shoes, or other items that are desirable to accommodate in said space, in addition to reduce it.

Moreover, such system is not at all simple in maintenance as well as being easily subject to breaking, given the high number of pieces. Moreover, said system is inconvenient in mounting operation: instead of reducing the assembly time of the seats and of the associated equipment, said system involves the creation of a plurality of holes in the support surface, in the central tunnel and in the lateral shoulders, to the detriment of functionality and also of the aesthetics of the vehicle. Due to the disadvantages herein mentioned, such system is not at all practical to be mounted on already assembled vehicles, in addition to be impractical even for the vehicles in the realization phase.

As is well known, the majority of vehicles is produced industrially by means of programmed robots, for which the factor of simplicity of industrial production, facility in assembly as well as speed in carrying out each operation, together with the production of a quality and robust product, (and preferably cheap) are factors of paramount importance and basically essential for the industry.

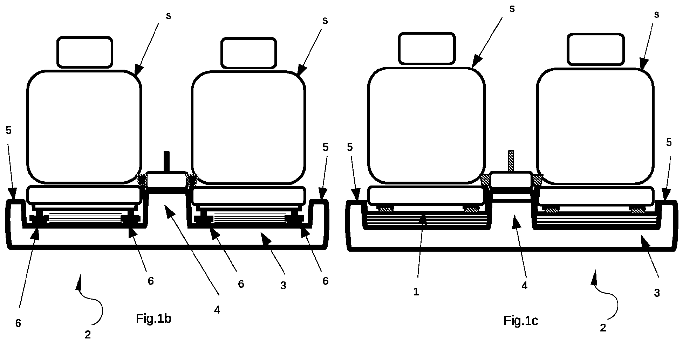

In fig. 1b it is represented in a front view in a vehicle an embodiment of a common mounting system for seats S having brackets and guides 6 fixed on the supporting surface 3 of the frame 2 of a motor vehicle. Said system is usually the best known system in the industry and the more widespread.

Said system presents all the disadvantages mentioned above.

Note that for the purpose of the present invention, the reference vehicle may be any vehicle, with or without central tunnel 4, with four-wheel drive, front, rear drive, and so on.

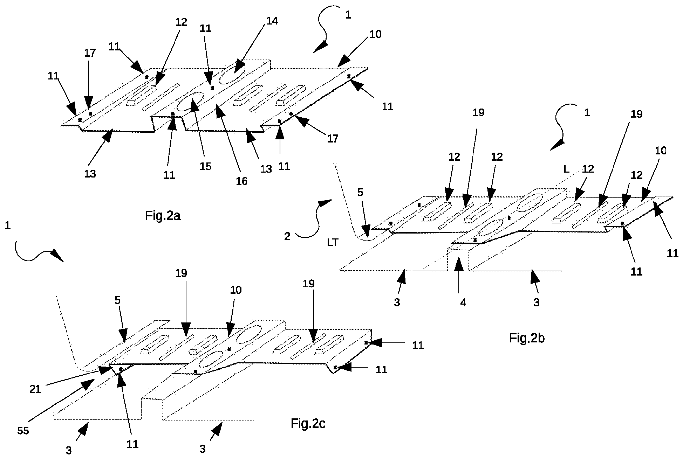

In fig. 1c it is represented in a front view, for better comparison with fig. 2b, an embodiment 1 of the innovative device for the mounting of seats described by the present invention. In a particularly advantageous way in fig. 1c it is clearly visible in comparison with fig. 1b as regards the space gained by the feet thanks to the use of the innovative device 1. As will be described below in detail, said device 1 is advantageously further suitable to house additional equipment forming part of known or necessary elements of any kind of vehicle.

In Figures 2a, 2b, 2c there are represented some particularly preferred embodiments of the innovative device 1 for mounting seats of a motor vehicle described by the present invention. Said device 1 for mounting seats of a motor vehicle comprises at least a floor pan 10 for the mounting of one or more seats (in the exemplary embodiments in particular the devices 1 are made for two seats S), said floor pan includes mounting areas 13 for said seats at least holes 11 for fixing said floor pan 10 on the lateral shoulders 5 and, in the present embodiment, on the central tunnel 4. In the present embodiment embossed areas of said floor pan 10 comprise holes 11 for fixing of said floor pan on the upper side of said shoulders 5.

Said floor pan 10 further comprises at least sliding guides 12 for the seats 5, and at least perforated areas 14 and 15 for housing for example of the gear lever, selector switches, conditioning modules, radio, navigation systems, storage compartments, armrests, as well as various cables and wiring necessary for the operation of on-board equipment. In particular, in the present embodiment it is represented a variant of the guides 6 for the sliding of the seats particularly suitable for the mounting of self-lubricating longitudinal sliding guides lateral locking of the seats.

Note that in a particularly advantageous way, said floor pan 10 is for example made in one piece by molding or is assembled in one piece, for example of a suitable material, such as sheet metal, for example painted or paintable in a second time depending on requirements, having a constant or variable thickness.

Still, said floor pan comprises a wall 16 in correspondence of the central tunnel, that can have a variable longitudinal height for height adjustment of the seat S as a function of the user's height.

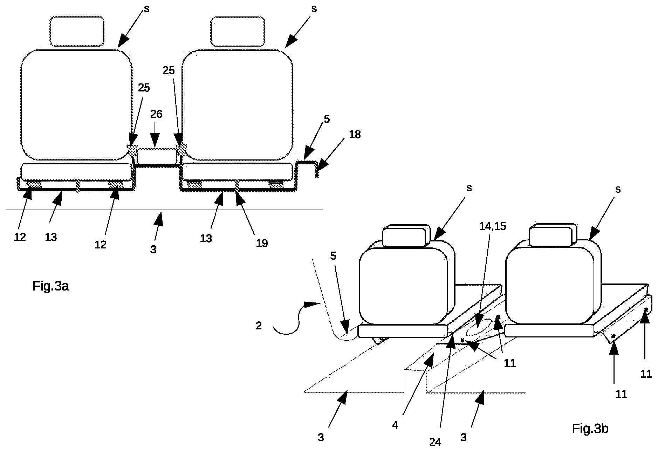

Said innovative device 1 may additionally comprise a plurality of holes 17 or slits 19 or housing or mounting means suitable for the purpose, for example the holes 17 (figur 2a) may be adapted to serve as a guide for the centering of the floor pan 10 on the frame 2 of the vehicle in a robotic assembly line; the slits can be realized as printed sheet metal slits, additional lateral slots, not represented here, may be able to serve as lateral sliding element to adjust the seat belts; the slits 19 (figures 2c,3a) may be suitable for the insertion of a sliding locking device of the seat S.

Any further housings or means may be for example predispositions for courtesy lights placed anteriorly and/or posteriorly to the seat to allow to see below said seat with more agility.

Note that said device 10 is obviously also suitable to be mounted on motor vehicles in more than one place, in this case it will be possible to accommodate many seats on many devices depending on the requirement of the case.

In further advantageous manner, if necessary for user's requirement, note that it is extremely simple to make said device available as a solution to be installed at any time of life of the vehicle, in fact it will be possible to modify with ease motor vehicles even in the post-production phase. It will be sufficient to remove the seats and the related equipment and reassemble on the floor pan 10 of the innovative device 1.

Moreover, said device 1 will be fully customizable by each automobile manufacturer, or even by the user.

In fig. 2b a variant of the innovative device 1 described by the present invention is represented; in particular in this case device 1 is mounted on the frame 2 of a motor vehicle, here the central tunnel 4 is smaller in size and the bearing floor and housing for the seats 10 has transversal development direction L, (namely width with respect to the longitudinal development direction LT intended as the greatest dimension of the floor pan 10), reduced with respect to the embodiment of fig. 2a, thus substantially may be due to a mere aesthetic choice, or to the internal dimensions of the vehicle, or to factors which may depend on the type of seat so that the device does not protrude excessively below the seat, or on the rear side or from the front one, in order not to give discomfort to the legs of the rear passenger in the case of fully forward seat, and neither for the legs of the front seat in the case fully backwards seat, or other suitable parameters.

In this embodiment the slits 19 and the holes 17 are not present, this also means that are representative only of some particularly preferred variants of the invention described herein.

In fig. 2c an embodiment substantially similar to that described in fig. 2b is represented, the difference in this case is represented by the attachment of said floor pan 10 to the vehicle, namely in the area where the fixing takes place in correspondence with the lateral shoulders 5; in this embodiment said floor pan floor pan 10 comprises areas 21 bent downwards, namely towards the support surface 3 of the frame 2; in this case the floor pan 10 is fixed to the inner side 55 of the lateral shoulder 5, this choice may be carried out for technical reasons or according to requirements, or even in some cases, by choice and preference of the customer in the case, for example, of high range vehicles.

In figs. 3a and 3b two views of said innovative device mounted on a motor vehicle are represented for better understanding of the advantageous aspects of the innovative device 10 for mounting seats herein described.

In the present innovative form of realization said device 1 comprises a floor pan 10, for example made in one piece, comprising two housing areas 13 for as many seats S. Said housing areas 13 of said floor pan 10 comprise one or more convexities or in this case a slot or groove 19 of appropriate dimensions for the movement of the seat S and for the housing of the sliding guides 12 for said seats S, said guides 12 may be obtained directly by stamping/deep drawing of the floor pan (or other procedure in case of floor pan in a non-metallic material). The guides 12, which may be structurally integral part of the floor, can for example be coated by a suitable antifriction material for a smooth longitudinal sliding of the seat S. The guides 12 can for example also be obtained by means of a mechanical fixing method of a metallic element coated with antifriction material or even of a single element of suitable anti-friction material. In place of the anti-friction material it can be used a suitable material for lubrication/greasing.

The floor pan 10 in this embodiment comprises an embossed 24 area of a shape suitable to outline the central tunnel of the motor vehicle, which may include the variable longitudinal height wall 16, in this embodiment, said device 1 is simply placed over said central tunnel 4 and is fixed by means of said fixing holes 11 for example on the top side of said lateral shoulders 5 and on said central tunnel 4 (fig. 3a on the right), or (fig. 3a on the left) the floor pan 10 can be realized folded upwards adhering to the inner vertical side 55 of the side shoulder 5, and therein be realized the fixing holes 11, or (as shown in fig. 3b) said floor pan 10 may be fixed with the fixing holes 11 via suitably shaped side flaps and fastening screws on the lateral shoulders 5, or (as shown in fig. 3b) said floor pan 10 may be fixed on said central tunnel 4 and to inner sides 55 of the shoulders 5, being said floor 10 in the fixing area folded down.

It appears immediately evident how this is extremely advantageous for industrial assembly purposes, both in the production phase of a motor vehicle, and in case of subsequent changes after the production stage. In particular in fig. 3a some standard fittings of a motor vehicle are visible, such as attacks for safety belts 25 and a storage bin 26, said fitting are advantageously neatly and conveniently mounted on said floor pan 10, in this case in correspondence with a profiling relief zone 24 of the central tunnel 4.

In fig. 3b it is visible a perforated area 14,15 for housing for example of said equipment.

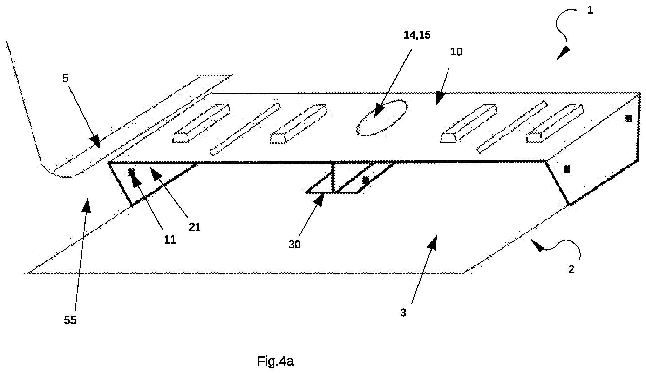

In figure 4a it is shown a further particularly preferred embodiment of the innovative device for mounting seats described by the present invention, in particular in this case it said innovative device 1 is suitable to be mounted on a motor vehicle devoid of the central tunnel 4, or in a zone of a motor vehicle devoid of said central tunnel 4. In particular in the present innovative form of realization said device further comprises a stiffening structure for said floor pan 10, such as a bracket 30 adapted to be secured on the supporting surface 3 of the frame 2. Even in this case may be present a perforated area 14,15 for housing of equipment or other functions. In the present embodiment, the floor pan 10 comprises zones 21 downwards bent, namely towards the support surface 3 of the frame 2; in this case the floor pan 10 is fixed to the inner side 55 of the shoulder 5, this choice can be made for technical reasons, or depending on the requirements as previously mentioned.

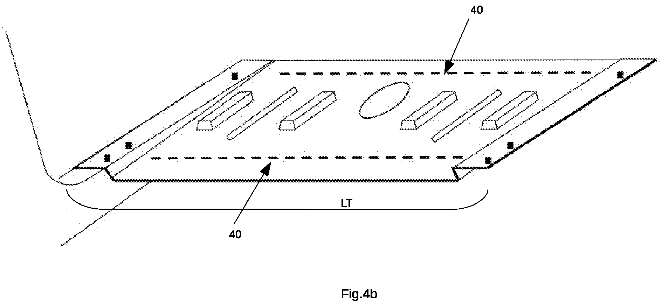

In fig. 4b it is shown a further preferred embodiment of a variant of the innovative device 10 described by the present invention, in particular in this case, said variant entails the absence of a central support structure of the floor pan 10. The device 1 comprises, transverse stiffening structures 40 welded, or otherwise fastened rigidly to the floor pan 10 for example in the direction LT of the floor pan development, to obviate the lack of said central support. In the variant shown here the floor pan 10 is fixed to the shoulders 5 as shown in fig. 2a and 2b.

In a further embodiment, for example, for the vertical locking of the seat S to the floor pan 10 and for the sliding/locking the seat in the longitudinal direction, the central slit 19 may comprise a serration along the edges, it can be formed directly in the structure of the floor pan 10 in an integral manner by molding in the case of a metallic floor pan, or the metal serration can be fixed on the slit in the event of non-metallic material.

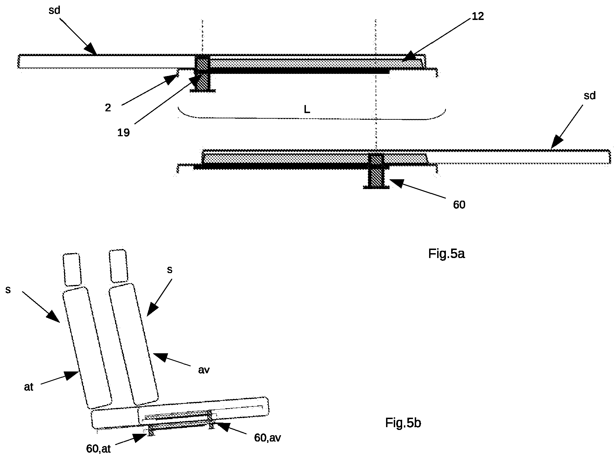

In fig. 5a an example of an embodiment 1 of the innovative device for the mounting of seats for motor vehicles is shown with regard to the displacement forward and back of the seats; it is visible in side view the frame 2 of the device 1 and the slit 19 which extends along the development direction L of the floor pan and enables movement of the seat, with particular reference in the figure to the sitting S D of the seat. In the slit 19 will be housed sliding means 60 attached to the seat S (and of course to the sitting S D) to maintain the seat in position and to allow its sliding forward and backward. At the two sides of the slit 19 there are shown as previously mentioned at least two guides 12 for the seat S adapted to support said seat S and preferably made of, or accompanied with, anti-friction material to allow easy movement forward and backward of the seat The locking of the seats takes place with common means and known fixing mechanisms and suitable for the purpose and not object of the present invention, as well as the sliding means 60, which may be, for example, a means or a mechanical control device, with spring and lever located at the front and under the seat, or for example electrically controlled release and handling.

Note that, preferably, the extension of the frame 2 of the device 1 along the direction L is smaller than the extension of the sitting of the seat S in the same direction of development, this said as not to hinder in any way the movements of the passenger accommodated on the seat S or of the passenger eventually accommodated behind said device 1. In a particularly advantageous way it is apparent that the housing of the seat S of said device is extremely simple and rapid, and also said one or more seats S are optimally supported by said device 1. And more, in an advantageous way said innovative device, due to the perfect integration with the vehicle will benefit from being painted with the same standard colors or selected from the buyer.

In fig. 5b a side view of a seat S in the forward AV or backward position AT with respect to the floor pan 10 of the device 1 is represented.

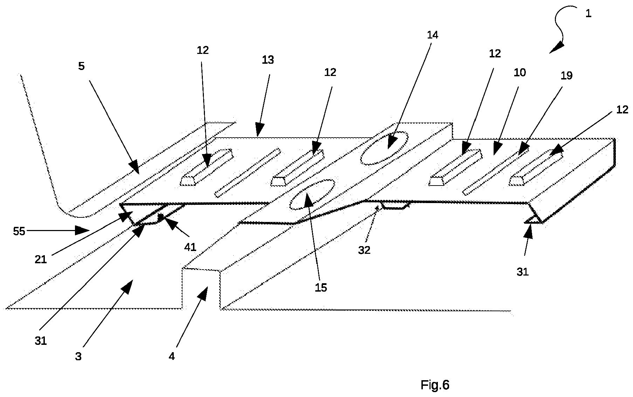

Finally in fig.6 it's represented a further preferred embodiment of the device 1 for mounting of seats described by the present invention; in particular in the present embodiment the realization here represented is suitable for mounting the device 1 on vehicles still in production and for witch a redesign of the supporting surface 3 is not expected. Substantially by adopting said solution In essence, by adopting such a solution, it will be necessary to make the mounting of the innovative device 1 in an adapted way, using the geometry of the vehicle as it is designed and of the holes already present; so the floor plan 10 of the innovative device 1 in this case will comprise one or more folded zones 21 with double fold 31, and / or one or more supports 32, welded or bolted to the device 1 (or securely fastened to the purpose), said double folded zones 31 and / or said folded zones 21 and / or said supports 32 comprise mounting holes 11, 41 suitable for coupling at one or more holes supposedly present on the supporting surface 3, where the seats S have originally been mounted, said supports / zones can be welded or bolted to the support plane 3, or be secured by other means suitable for the purpose. It will seem obvious that the innovative device 1 described herein, in addition to being unlike any other known art device manufactured today, advantageously realized in single piece or soldered as a single piece for being handy and a quick mounting device, is also extremely versatile and substantially adaptable to at least a plurality of vehicle types.

Thus, the innovative device 1 described herein, which can fulfill the purposes of which it has been extensively referred here above, may be designed in appropriate thicknesses and geometries so as to cooperate with the structures of the supporting plane 3, to meet the requirements of robustness deriving from the various project parameters. Even the vertical position of the hip point, an important parameter considered in the design of seats and appended, i.e. the passenger seat hip support angle on the seat, can be freely decided and is in no way bound by the device.

It should be noted that said innovative device 1 for mounting of seats can be realized with a floor pan 10 having one place, two places or more than two places, maintaining each described innovative feature, this depending on the vehicle on which it will be mounted.

It will be obviously possible to mount one or more devices on each vehicle according to the requirements.

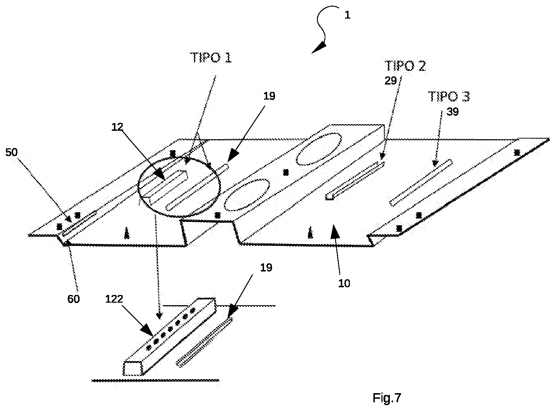

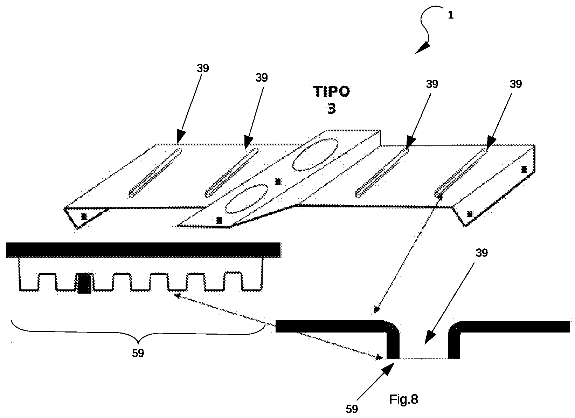

And more, in figures 7 and 8, there are represented some particularly preferred embodiments of slots 19 (defined type 1) for housing securing means for said seats; in the embodiment of Figure 7, there are three different types of seat fasteners; type 1, i.e. the type already described with reference to the preceding figures, comprises said slit 19 and slide guides 12, as already extensively described with reference to the preceding figures; said guides 12 as said may also be provided as thickenings of the floor plan 10 during molding; in particular, a detail of a particular embodiment of said sliding guides is illustrated, wherein said guides comprise holes 122 or perforated zones which act as a position lock for the seat in various positions.

Type 2 includes guides or rails 29 that can be fixed during the assembly phase of the device, or applied at any stage advantageously in any position, depending on the type of seats S.

It should be noted that figure 7 further depicts the detail (possible embodiment) of a sliding opening 50 for a safety belt and also the detail of a possible slope 60 with which the floor can already being printed in production phase for height adjustment of the seat

Type 3 in a particularly advantageous way is extremely simple to produce when molding of the floor plan 10; in this step, slots 39 are provided to accommodate seat fastening / sliding means, said slots may comprise, as can be seen in detail in figure 8, indentations 59 (one or more) shaped to allow the seat to be secured to the desired position. It appears evident that the herein described device 10 allows to achieve all the innovative purposes described herein, in particular, are to be considered object of the present invention variants such as: geometries, such as the geometry of the floor pan of the innovative device that will be a function of the size of the vehicle, of the type of motorization and power transmission, of the type of accessories that is provided in the space between the two seats, and so on, and will therefore be subject to changes in the proportions and shapes with respect to those shown in the drawings; thicknesses which depend for example, from: the material, the maximum speed of the vehicle, the degree of impact resistance, the choice of the various locking mechanisms of the seats; the type of locking systems of the floor pan to the vehicle structure; the use of any type of material suitable for the purpose and designed in accordance with the type of the vehicle, such as. steel, aluminum alloy, carbon fiber and so on. Moreover, variations in the locking mechanism of the seats in the transverse, longitudinal and vertical direction with respect to the vehicle, variants in the system for moving and locking seats in the transverse, longitudinal and vertical direction with respect to the vehicle, are all variants which do not alter the scope of protection conferred by the present invention, as is the case of the type of accessories (electrical, mechanical, hydraulic) which can be mounted on said device, as well as the size and shape of the seats and numerosity of the same, as well as the methods of mounting, are further variants of the innovative device described here and are to be considered included in the object of the present invention with regard to the modifications to the embodiments in this regard, as described by the appended claims.

## Claims

1. A device (1) for mounting seats for motor vehicles, comprising at least means for housing and supporting one or more seats (S) of a motor vehicle, said means being configured to be at least fixed to the frame (2) of said vehicle comprising at least one supporting surface (3) and lateral shoulders (5), said device comprising at least one floor pan (10) for mounting one or more seats (S), said floor pan (10) comprising one or more housing zones (13) for said one or more seats and being configured to be fixed to the frame (2) of the vehicle at least to the lateral shoulders (5) of the vehicle, said floor pan (10) being able to lift said one or more seats from the supporting surface (3) of the frame (2), said floor pan (10) being in one piece or being assembled in one piece for being quickly mounted and being substantially adaptable to any vehicle and leaving substantially free of any encumbrance the supporting surface (3) of the vehicle and wherein said device (1) is configured to allow mounting of two seats and to be pre-assembled with said seats, **characterized in that** said floor pan (10) comprises holes (11,41) for fixing of said floor pan (10) to at least said lateral shoulders (5), said device being able to provide more space for the feet of the rear passengers.

2. Device (1) for mounting seats for motor vehicles according to the preceding claims, wherein said floor pan (10) comprises at least one embossed zone (24) adapted to house a central tunnel (4) of the frame (2).

3. Device (1) for mounting seats for motor vehicles according to claim [3] 2, wherein said embossed zone (24) comprises a wall (16) with variable longitudinal height for adjusting the height of the seat(S).

4. Device (1) for mounting seats for motor vehicles according to claim [4] 3, wherein said embossed zone (24) comprises holes for fixing said floor pan (10) to said central tunnel (4) and perforated areas (14,15) for the accommodation of on-board equipment.

5. Device (1) for mounting seats for motor vehicles according to the previous claims, wherein said floor pan (10) comprises sliding guides (12) for scrolling forward and backward of said one or more seats (S) and slits (19) for the insertion of sliding devices for locking said seats (S).

6. Device (1) for mounting seats for motor vehicles according to the preceding claims, in which said floor pan (10) comprises embossed lateral areas (18) for attachment of said floor pan (10) on the upper side of said side shoulders (5) or folded lateral areas (21) for fixing said floor pan (10) to the inner side (55) of said shoulders (5) .

7. Device (1) for mounting seats for motor vehicles according to the preceding claims, wherein said floor pan (10) further comprises a bracket (30) for attachment of said floor pan (10) on the supporting surface (3) of said frame (2) for strengthening said floor pan (10) in the absence of support on a central tunnel (4).

8. Device (1) for mounting seats for motor vehicles according to one or more of the preceding claims, wherein said floor pan (10) further comprises stiffening structures (40) integral to said floor pan for strengthening said floor pan along the direction (LT).

9. Device (1) for mounting seats for motor vehicles according to one or more of the preceding claims, wherein said floor pan (10) comprises one or more folded zones (21) with double fold (31) and/or one or more supports (32), said zones or supports being welded or bolded to the device, with the mounting holes (41) to be coupled in correspondence of holes supposedly present on the supporting surface (3) of the vehicle.

10. Device (1) for mounting seats for motor vehicles according to one or more of the preceding claims, wherein said floor pan (10) further comprises at least sliding guides (12) for the seats, and at least perforated areas (14,15) for housing of the gear lever, selector switches, conditioning modules, radio, navigation systems, storage compartments, armrests, as well as cables and wiring necessary for the operation of on-board equipment.

## Patentansprüche

1. Vorrichtung (1) zum Montieren von Sitzen für Kraftfahrzeuge, umfassend mindestens eine Einrichtung zum Aufnehmen und Tragen eines oder mehrerer Sitze (S) eines Kraftfahrzeugs, wobei die Einrichtung konfiguriert ist, um mindestens an dem Rahmen (2) des Fahrzeugs befestigt zu sein, umfassend mindestens eine Stützfläche (3) und seitliche Schultern (5), wobei die Vorrichtung mindestens eine Bodenwanne (10) zum Montieren eines oder mehrerer Sitze (S) umfasst, wobei die Bodenwanne (10) eine oder mehrere Aufnahmezonen (13) für den einen oder die mehreren Sitze umfasst und konfiguriert ist, um an dem Rahmen (2) befestigt zu sein, des Fahrzeugs zumindest an den seitlichen Schultern (5) des Fahrzeugs angebracht ist, wobei die Bodenwanne (10) in der Lage ist, den einen oder die mehreren Sitze von der Stützfläche (3) des Rahmens (2) anzuheben, wobei die Bodenwanne (10) einstückig ist oder einstückig zusammengebaut ist, um schnell montiert zu werden, und im Wesentlichen an jedes Fahrzeug angepasst werden kann und im Wesentlichen frei von jeder Belastung der Stützfläche (3) des Fahrzeugs bleibt, und wobei die Vorrichtung (1) so konfiguriert ist, dass sie die Montage von zwei Sitzen ermöglicht und mit den Sitzen vormontiert werden kann, **dadurch gekennzeichnet, dass** die Bodenwanne (10) Löcher (11, 41) umfasst zum Befestigen der Bodenwanne (10) an mindestens den seitlichen Schultern (5), wobei die Vorrichtung in der Lage ist, mehr Platz für die Füße der hinteren Passagiere bereitzustellen.

2. Vorrichtung (1) zum Montieren von Sitzen für Kraftfahrzeuge nach den vorhergehenden Ansprüchen, wobei der die Bodenwanne (10) mindestens eine geprägte Zone (24) aufweist, die einen Mitteltunnel (4) des Rahmens (2) aufnehmen kann.

3. Vorrichtung (1) zum Montieren von Sitzen für Kraftfahrzeuge nach Anspruch 2, wobei die geprägte Zone (24) eine Wand (16) mit variabler Längshöhe zum Einstellen der Höhe des Sitzes (S) aufweist.

4. Vorrichtung (1) zum Montieren von Sitzen für Kraftfahrzeuge nach Anspruch 3, wobei die geprägte Zone (24) Löcher zur Befestigung der Bodenwanne (10) an dem Mitteltunnel (4) und perforierte Bereiche (14, 15) zur Aufnahme von Bordausrüstung aufweist.

5. Vorrichtung (1) zum Montieren von Sitzen für Kraftfahrzeuge nach den vorhergehenden Ansprüchen, wobei die Bodenwanne (10) Gleitführungen (12) zum Vor- und Zurückrollen des einen oder der mehreren Sitze (S) und Schlitze (19) zum Einsetzen von Gleitvorrichtungen zum Verriegeln der Sitze (S) aufweist.

6. Vorrichtung (1) zum Montieren von Sitzen für Kraftfahrzeuge nach den vorhergehenden Ansprüchen, wobei der die Bodenwanne (10) geprägte Seitenbereiche (18) zur Befestigung der Bodenwanne (10) an der Oberseite der seitlichen Schultern (5) oder gefaltete Seitenbereiche (21) zur Befestigung der Bodenwanne (10) an der Innenseite (55) der Schultern (5) aufweist.

7. Vorrichtung (1) zum Montieren von Sitzen für Kraftfahrzeuge nach den vorhergehenden Ansprüchen, wobei die Bodenwanne (10) ferner eine Halterung (30) zum Befestigen der Bodenwanne (10) auf der Stützfläche (3) des Rahmens (2) zum Verstärken der Bodenwanne (10) in Abwesenheit einer Abstützung auf einem Mitteltunnel (4) aufweist.

8. Vorrichtung (1) zum Montieren von Sitzen für Kraftfahrzeuge nach einem oder mehreren der vorhergehenden Ansprüche, wobei die Bodenwanne (10) ferner Versteifungsstrukturen (40) aufweist, die einstückig mit der Bodenwanne ausgebildet sind, um die Bodenwanne entlang der Richtung (LT) zu verstärken.

9. Vorrichtung (1) zum Montieren von Sitzen für Kraftfahrzeuge nach einem oder mehreren der vorhergehenden Ansprüche, wobei die Bodenwanne (10) eine oder mehrere gefaltete Zonen (21) mit doppelter Faltung (31) und/oder eine oder mehrere Stützen (32) aufweist, wobei die Zonen oder Stützen mit der Vorrichtung verschweißt sind, oder wobei die Befestigungslöcher (41) in Übereinstimmung mit Löchern, die angeblich auf der Stützfläche (3) des Fahrzeugs vorhanden sind, zu koppeln sind.

10. Vorrichtung (1) zum Montieren von Sitzen für Kraftfahrzeuge nach einem oder mehreren der vorhergehenden Ansprüche, wobei die Bodenwanne (10) ferner mindestens Gleitführungen (12) für die Sitze und mindestens perforierte Bereiche (14, 15) zur Aufnahme des Schalthebels, Wahlschalter, Konditionierungsmodule, Radio, Navigationssysteme, Ablagefächer, Armlehnen sowie Kabel und Verkabelungen, die für den Betrieb von Bordgeräten erforderlich sind, aufweist.

## Revendications

1. Dispositif (1) de montage de sièges pour véhicules automobiles, comprenant au moins des moyens de logement et de support d'un ou plusieurs sièges (S) d'un véhicule automobile, lesdits moyens étant configurés pour être au moins fixés au châssis (2) dudit véhicule comprenant au moins une surface d'appui (3) et des épaulements latéraux (5), ledit dispositif comprenant au moins un bac de plancher (10) pour le montage d'un ou plusieurs sièges (S), ledit bac de plancher (10) comprenant une ou plusieurs zones de logement (13) pour lesdits un ou plusieurs sièges et étant configuré pour être fixé au châssis (2) du véhicule au moins aux épaulements latéraux (5) du véhicule, ledit bac de plancher (10) pouvant soulever ledit un ou plusieurs sièges de la surface d'appui (3) du châssis (2), ledit bac de plancher (10) étant en une seule pièce ou étant assemblé en une seule pièce pour être rapidement monté et être pratiquement adaptable à tout véhicule et laissant pratiquement libre de tout encombre la surface d'appui (3) du véhicule et dans lequel ledit dispositif (1) est configuré pour permettre le montage de deux sièges et à pré-assembler avec lesdits sièges, **caractérisé en ce que** ledit bac de plancher (10) comprend des trous (11,41) pour la fixation dudit bac de plancher (10) sur au moins lesdits épaulements latéraux (5), ledit dispositif pouvant offrir plus d'espace pour les pieds des passagers arrière.

2. Dispositif (1) de montage de sièges pour véhicules automobiles selon les revendications précédentes, où ledit bac de plancher (10) comprend au moins une zone en relief (24) adaptée pour loger un tunnel central (4) du châssis (2).

3. Dispositif (1) de montage de sièges pour véhicules automobiles selon la revendication 2, où ladite zone en relief (24) comprend une paroi (16) à hauteur longitudinale variable pour régler la hauteur du ou des siège(s).

4. Dispositif (1) de montage de sièges pour véhicules automobiles selon la revendication 3, où ladite zone en relief (24) comprend des trous pour la fixation dudit bac de plancher (10) audit tunnel central (4) et des zones perforées (14, 15) pour le logement des équipements de bord.

5. Dispositif (1) de montage de sièges pour véhicules automobiles selon les revendications précédentes, où ledit bac de plancher (10) comprend des guides coulissants (12) pour faire glisser vers l'avant et vers l'arrière lesdits un ou plusieurs sièges (S) et fentes (19) pour l'insertion de dispositifs coulissants pour verrouiller lesdits sièges (S).

6. Dispositif (1) de montage de sièges pour véhicules automobiles selon les revendications précédentes, où ledit bac de plancher (10) comprend des zones latérales en relief (18) de fixation dudit bac de plancher (10) sur la face supérieure desdits épaulements latéraux (5) ou des zones latérales pliées (21) pour fixer ledit bac de plancher (10) au côté intérieur (55) desdits épaulements (5).

7. Dispositif (1) de montage de sièges pour véhicules automobiles selon les revendications précédentes, où ledit bac de plancher (10) comprend en outre une patte (30) pour la fixation dudit bac de plancher (10) sur la surface d'appui (3) dudit châssis (2) pour renforcer ledit bac de plancher (10) en l'absence d'appui sur un tunnel central (4).

8. Dispositif (1) de montage de sièges pour véhicules automobiles selon l'une ou plusieurs des revendications précédentes, où ledit bac de plancher (10) comprend en outre des structures de raidissement (40) solidaires dudit bac de plancher pour renforcer ledit bac de plancher le long de la direction (LT).

9. Dispositif (1) de montage de sièges pour véhicules automobiles selon une ou plusieurs des revendications précédentes, où ledit bac de plancher (10) comprend une ou plusieurs zones pliées (21) à double pli (31) et/ou un ou plusieurs supports (32), lesdites zones ou supports étant soudés ou étant boulonnés au dispositif avec les trous de montage (41) à coupler en correspondance des trous étant supposés présents sur la surface d'appui (3) du véhicule.

10. Dispositif (1) de montage de sièges pour véhicules automobiles selon une ou plusieurs des revendications précédentes, où ledit bac de plancher (10) comprend en outre au moins des guides coulissants (12) pour les sièges, et au moins des zones perforées (14, 15) pour le logement du levier de vitesses, des sélecteurs, des modules de conditionnement, de la radio, des systèmes de navigation, des vide-poches, des accoudoirs, ainsi que des câbles et câblages nécessaires au fonctionnement des équipements de bord.
